# EUROPEAN PATENT APPLICATION

(11) **EP 1 219 261 A2**
(43) Date of publication of application: **03.07.2002**
(21) Application number: 01201849.5
(22) Date of filing: 17.05.2001
(51) Int. Cl.: A61C 5/04

(54) **Gutta-percha point for locating apex for odontological use**

(30) Priority: 26.12.2000 ES 200003113
(71) Applicant: Pina Lopez, Juan Carlos, 50002 Zaragoza (ES)
(72) Inventor: Pina Lopez, Juan Carlos, 50002 Zaragoza (ES)
(74) Representative: Davila Baz, Angel

(57) **Abstract**

Gutta-percha point for locating an apex for odontological use, comprising a gutta-percha part (2) having an exterior which is shaped to a root canal to be filled by the part (2) and the exterior having a point end to be inserted and an electrode (3) extending along the gutta-percha part toward the point end, the electrode (3) being shaped and placed to have access to the exterior of the gutta-percha part (2) to be exposed to whatever is in contact with the gutta-percha part there. The electrode (3) extends away from the point end of the part and is connectable to a device (8) for locating an apex.

## Description

### BACKGROUND OF THE INVENTION

The present invention refers to a gutta-percha point for locating odontological apexes and particularly to such a point that has an electrode that facilitates the point being located during endodontia.

The present system for carrying out endodontia requires that a gutta-percha point, which is being installed to seal a root canal of the tooth, must measure exactly the same as its preparation length, reaching the apex. But, in reality, there is no proof that this occurs, since the method of verifying it (by x-rays, radiovisiographs, etc.) only provides an image but not actual proof that this occurs. As a result, the gutta-percha point might be short or long with respect to the location of the dental apex. This is due to anatomical variations of different patients and to x-ray distortions.

### DESCRIPTION OF THE INVENTION

The invention relates to a gutta-percha point in accordance with claim 1. Prefered embodiments of the invention are defined in the dependent claims.

Due to its design and use, the gutta-percha point of the invention seals a root canal in endodontia in an optimal manner because the point has an electrode that, when connected to a device for locating an apex, exactly determines the location of the apex. This provides precision and does not require that x-ray plates be made. In addition, a suitable electrode can be bent for giving a curved shape to the gutta-percha point that allows for its adaptation to the curved shape of a particular root canal.

The point according to the invention comprises a preferably substantially conical shape, gutta-percha part, which incorporates, preferably in its interior or along its lateral flank, an electrode of a preferably biocompatible material, such as steel, titanium, etc. In preferred embodiments, the electrode terminates at a minimal distance from the deep end part of the point, and the electrode accesses the exterior of the point along its lateral side in a zone that preferably is shaped with a slight concavity. The electrode in the concavity is thereafter sealed with a sealing cement. On the opposite end, the electrode extends to the exterior of the point in order to be connected to a device for locating an apex (Just. II, Root ZX, etc.). In an alternate embodiment, the electrode extends through the part and exits at the point of the part at its end.

In this way, by having previously wet the gutta-percha point, the electrical impulses of the apex-locating device are transmitted through the electrode and the liquid medium to the end of the apex, which acts as a conductor. Then, before the final placement of the gutta-percha point with sealing cement, the point is dried. The point was able to be pre-formed to adapt the space for curved root canal because of its design, which includes the electrode itself. The electrode may be located internally or inside the point or may be placed against a side or flank on the exterior of the point.

Once the sealing is performed, screws, pins, etc. can be placed in, since drills can easily wear out the gutta-percha with an included filament.

In addition, in case of sealing with hot gutta-percha SISTEM B, the heat given off by the point of SISTEM B is sufficient to fulgurate the filament and completely seal the apex.

### BRIEF DESCRIPTION OF THE DRAWINGS

Figure 1 shows a point according to the invention and its placement in a root canal.
Figure 2 shows a detail of the end of the electrode of the point of the invention.
Figure 3 shows a gutta-percha point of the invention with a central internal electrode with a curved end (electrode of steel or titanium).
Figure 4 shows a gutta-percha point of the invention with an inclined straight internal electrode (electrode of steel or titanium).
Figure 5 shows a gutta-percha point of the invention with a straight external lateral electrode.
Figure 6 shows a gutta-percha point of the invention with a central straight internal electrode (electrode of biocompatible titanium).
Figure 7 is a cross-section of part of Figure 6.

### DESCRIPTION OF PREFERRED EMBODIMENTS OF THE INVENTION

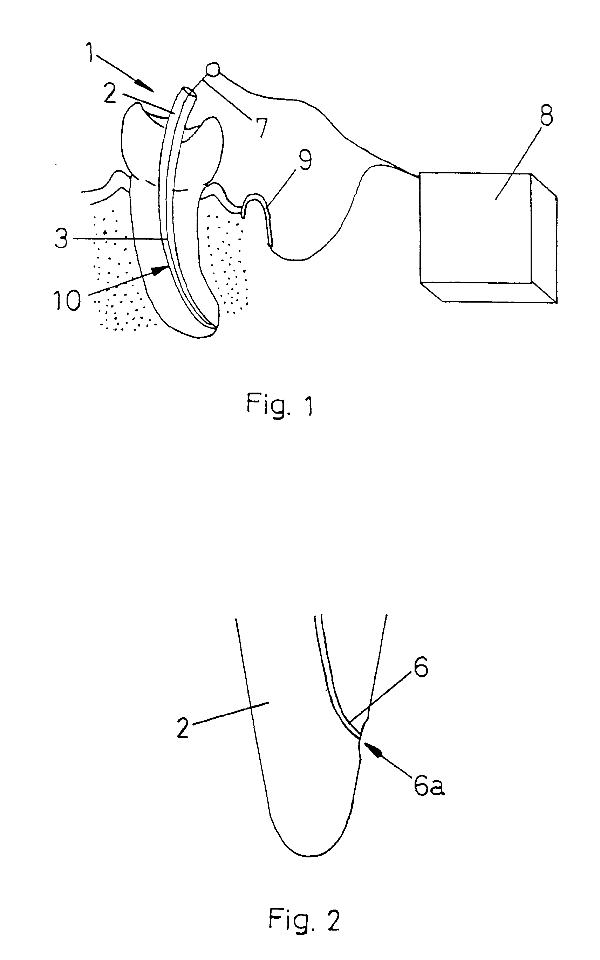

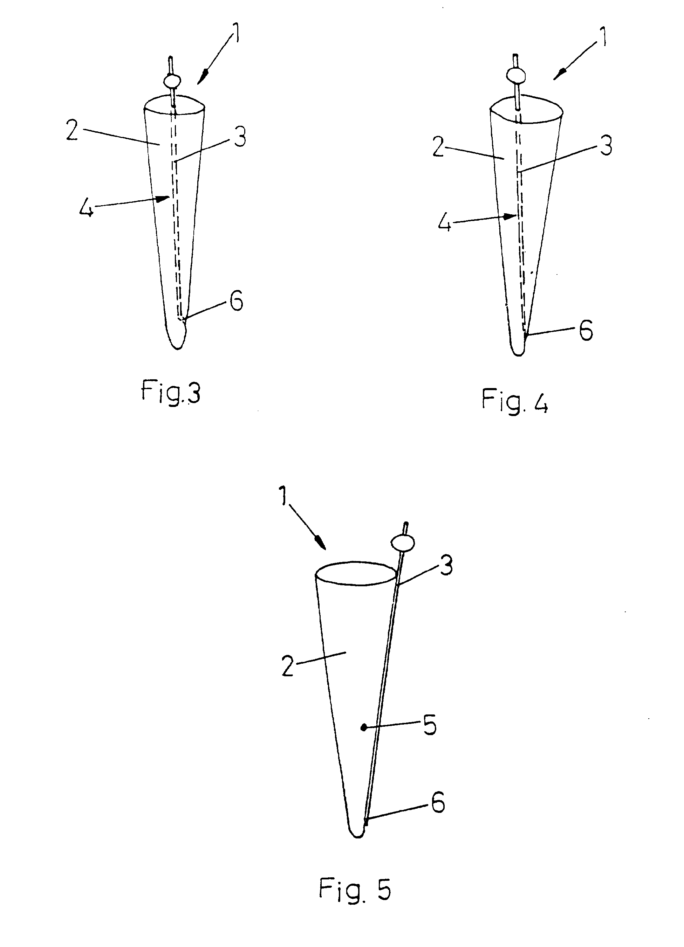

A point 1 according to the invention is comprised of a substantially conical shape gutta-percha part 2 that incorporates an electrode 3 comprised of titanium or steel or of other biocompatible material. The electrode extends through the interior 4 of the point (Figs. 2-4, 6-7) or extends along and against the lateral wall 5 of the point (Fig. 5).

Referring to Fig. 2, the inward end 6 of the electrode is generally at the end zone of the point and the end is provided with access to the exterior of the point, at approximately 0.5 mm from the end of the point. The gutta-percha point appears in this zone in an area on the flank of the point with a slight concavity 6a. That concavity is later to be sealed with sealing cement which seals the end of the electrode and the exit openings from the point.

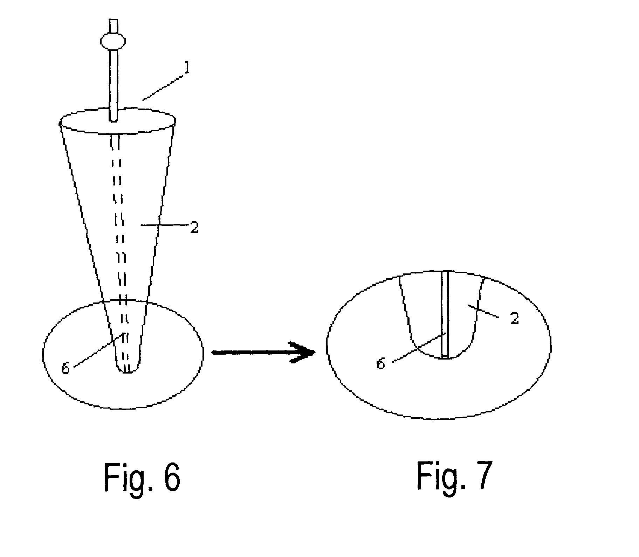

The opposite outward end 7 of the electrode outside the outer end of the point is connected to a device 8 for locating an apex. The mass electrode 9 of the device 8 is placed in contact with the patient's soft tissue so that the measurement can be made, taking into account that 0.5 mm should be subtracted from the measurement obtained, which is the excess length of the gutta-percha from the end of the electrode to the end of the gutta-percha point. In the case of a titanium electrode, that is not necessary because it ends just at the end of the gutta-percha point (Figs. 6 and 7).

The point 1 is introduced in the root canal 10 in order to be able to locate its apex. Then the point is removed from the canal to dry it. Then it is reinstalled with final sealing using any sealing cement.

The electrode may extend through the point and be curved at its end to open out at the surface or flank at 6a, as in Figs. 2 and 3, or may be straight to intersect the inclined flank of the point, as in Fig. 4, or may extend along the flank down to the measured distance from the tip, as in Fig. 5, or may extend straight through the axial center of the point to its apex where it is exposed to the outside, as in Figs. 6 and 7.

Although the present invention has been described in relation to particular embodiments thereof, many other variations and modifications and other uses will become apparent to those skilled in the art. It is preferred, therefore, that the present invention be limited to not by the specific disclosure herein, but only by the appended claims.

## Claims

1. Gutta-percha point (1) for locating an apex for odontological use, comprising
a gutta-percha part (2) having an exterior which is shaped to a root canal (10) to be filled by the part, the gutta-percha part (2) having a point end to be inserted into said root canal (10);
**characterised in that** it further comprises
an electrode (3) extending along the gutta-percha part (2) toward the point end, the electrode (3) being shaped and placed to have access to the exterior of the gutta-percha part (2) to be exposed to whatever is in contact with the gutta-percha part (2) there;
the electrode (3) extending away from the point end of the gutta-percha part and being connectable to a device (8) for locating an apex.

2. Gutta-percha point according to claim 1, wherein the electrode (3) extending along the gutta-percha part toward the point end terminates spaced a distance from the point end.

3. Gutta-percha point according to any of the preceding claims, wherein the gutta-percha part (2) is substantially conical in shape including the point end insertable into the root canal and a wider end and the electrode (3) being at the exterior of the part at least toward the point end.

4. Gutta-percha point according to any of the preceding claims, wherein the electrode is comprised of biocompatible material at least at the area thereof at the exterior of the gutta-percha part (2).

5. Gutta-percha point according to claim 4, wherein the electrode (3) extends through the interior (4) of the gutta-percha part (2) toward the point end and the electrode has an end (6) region where the electrode exits to the exterior of the gutta-percha part (2).

6. Gutta-percha point according to any of claims 1-3, wherein the electrode (3) extends along the exterior of the gutta-percha part (2) toward the point end thereof.

7. Gutta-percha point according to any of the preceding claims, wherein the electrode end (6) region ends at a minimal distance from the point end.

8. Gutta-percha point according to any of the preceding claims, wherein the electrode end (6) region ends at 0.5 mm from the point end.

9. Gutta-percha point according to any of the preceding claims, wherein the gutta-percha point has a slightly concave zone (6a) near the point end and the end of the electrode (3) being in the slightly concave zone (6a) of the gutta-percha point.

10. Gutta-percha point according to claim 9, wherein the concave zone (6a) is sealed with sealing cement.

11. Gutta-percha point according to claim 1, wherein the electrode extending along the gutta-percha part (2) toward the point end extends straight through the center of the gutta-percha point to the point end (Figs. 6 and 7).

12. The gutta-percha point of Claim 11, wherein the electrode (3) is comprised of titanium.
